(19) **Europäisches Patentamt**

**European Patent Office**  (11) Veröffentlichungsnummer: **0 134 513**

**Office européen des brevets**  **B1**

(12) **EUROPÄISCHE PATENTSCHRIFT**

(45) Veröffentlichungstag der Patentschrift: 15.11.89  (51) Int. Cl.⁴: **H 01 B 3/42, C 08 F 283/01**

(21) Anmeldenummer: **84108373.6**

(22) Anmeldetag: **17.07.84**

(54) Tränkharzmassen und Verfahren zum Isolieren von elektrischen Wicklungen.

---

(30) Priorität: **19.07.83 DE 3325943**

(43) Veröffentlichungstag der Anmeldung: **20.03.85 Patentblatt 85/12**

(45) Bekanntmachung des Hinweises auf die Patenterteilung: **15.11.89 Patentblatt 89/46**

(84) Benannte Vertragsstaaten: **AT CH DE FR GB IT LI NL SE**

(56) Entgegenhaltungen:
**DE-A-1 564 091**
**DE-A-1 640 368**
**FR-A-2 111 161**

(73) Patentinhaber: **Herberts Gesellschaft mit beschränkter Haftung, Christbusch 25, D-5600 Wuppertal 2 (DE)**

(72) Erfinder: **Kiessling, Gerhard, Sprockhöveler-Strasse 95, D-4320 Hattingen (DE)**
Erfinder: **Pillath, Raimund, Dipl.- Ing., Wilhelm-Raabe- Weg 39, D-5600 Wuppertal 1 (DE)**
Erfinder: **Kerber, Hermann, Dipl.- Ing., Daniel-Schürmann- Weg 37, D-5600 Wuppertal 21 (DE)**

(74) Vertreter: **Türk, Gille, Hrabal, Bruckner Strasse 20, D-4000 Düsseldorf 13 (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft Tränkharzmassen bestehend aus ungesättigten Polyestern und Acryloyl- und/oder Methacryloylverbindungen als Reaktivverdünner sowie gegebenenfalls üblichen Zusatzstoffen. Derartige Tränkharzmassen werden zur Isolierung von elektrischen Wicklungen, wie Motoren, Transformatoren und Generatoren eingesetzt.

Tränkharzmassen der eingangs beschriebenen Art werden in großem Umfang technisch eingesetzt und u. a. in der DE-A-1 570 273 und 2 856 050 beschrieben. Die in der Praxis eingesetzten Tränkharzmassen enthalten jedoch ausschließlich Styrol als copolymerisierbare monomere Verbindungen (sogenannte Reaktivverdünner). Obwohl in den genannten Druckschriften erwähnt ist, daß als Reaktivverdünner auch Acryloyl- und/oder Methacryloylverbindungen eingesetzt werden könnten, werden Beispiele hierfür nicht geliefert, und es gibt keine Handelsprodukte, die diese Reaktivverdünner anstelle von Styrol enthalten. Der Grund hierfür liegt darin, daß die Tränkharzmassen eine hohe Viskosität haben, so daß man annahm, eine einwandfreie Tränkung der elektrischen Wicklungen könne nicht erzielt werden.

Die Verwendung von Styrol als Reaktivverdünner liefert zwar genügend niedrig viskose Tränkharzmassen, ist jedoch mit mehreren Nachteilen verbunden. Styrol wird zu einem erheblichen Anteil während des Aushärtens abgedampft, geht also verloren. Die Styrol-Verluste liegen in der Größenordnung von etwa 15 bis 30 Gew.-%, bezogen auf die zum Tränken verwendeten Tränkharzmassen. Der Geruch von Styrol ist außerordentlich lästig. Es ist physiologisch nicht unbedenklich und gehört zur Schadstoffklasse II gemäß TA-Luft (Technische Anweisung Luft der Bundesrepublik Deutschland). Styrol-haltige Tränkharzmassen haben auch den Nachteil, daß sie in gewissem Umfang die Lackdraht-Isolationen angreifen, was zur Folge haben kann, daß sich in der Lackdraht-Isolation Risse bilden, was zu beträchtlichen Verschlechterungen des Isoliersystems im praktischen Einsatz mit den entsprechenden Folgen führen kann.

Der vorliegenden Erfindung liegt die Aufgabe zugrunde, Tränkharzmassen zu finden, die einen geringeren Abdampfverlust haben, physiologisch zumindest nicht bedenklicher sind als Styrol-haltige Tränkharzmassen, die aber eine stärkere Penetration der getränkten Wicklungen und damit einen besseren Imprägniereffekt zur Folge haben.

Die DE-AS-2 145 767 und die US-3 655 823 betreffen allgemein Massen aus Basis von Polyestern und Acryloylverbindungen, ohne daß der spezielle Verwendungszweck der vorliegenden Erfindung, nämlich die Verwendung zum Imprägnieren von elektrischen Wicklungen durch Tränken der Wicklungen mit Tränkharzmassen, beschrieben wird. Insofern geben diese Druckschriften keine Anregung für die vorliegende Erfindung.

Unabhängig werden in diesen Druckschriften Massen beansprucht und beschrieben, die ganz bestimmte und zwar relativ komplizierte und entsprechend schwerer zugängliche Acryloylverbindungen enthalten. Es ist gegenüber diesem Stand der Technik überraschend, daß so einfache Acryloylverbindungen, wie sie erfindungsgemäß eingesetzt werden, die ausgezeichneten durch Beispiele belegten Ergebnisse ergeben, während, wie dargelegt, selbst einfache sonst üblicherweise eingesetzte Acryloylverbindungen unbrauchbar sind.

Wenn man versucht, gemäß den erwähnten DE-A-1 570 273 und 2 856 050 Tränkharzmassen auf Basis von ungesättigten Polyesterharzen und Acryloyl- und/oder Methacryloylverbindungen herzustellen, wobei man übliche derartige Verbindungen, wie Hydroxypropylmethacrylat (HPMA), Butandioldimethacrylat (BDDMA) und Neopentylglycoldimethacrylat (NPG - DMA) allein einsetzt, findet man, daß entsprechende Tränkharzmassen unbrauchbare Eigenschaften ergeben. Es wurde aber in überraschender Weise gefunden, daß ganz bestimmte Acrylate nicht nur brauchbar sind, sondern die oben erörterten Nachteile der Styrol-haltigen Tränkharzmassen vermeiden und darüber hinaus unerwartete Vorteile ergeben, wie nachfolgend im einzelnen dargelegt wird.

Gegenstand der Erfindung sind demgemäß Tränkharzmassen auf Basis von ungesättigten Polyestern und Acryloyl- und/oder Methacryloylverbindungen als Reaktivverdünner sowie gegebenenfalls üblichen Zusatzstoffen, die dadurch gekennzeichnet sind, daß sie als Reaktivverdünner

a) Hexandioldiacrylat und/oder
b) Butandioldiacrylat

enthalten, und daß die Viskosität der Tränkharzmassen maximal 1500 mPa·s beträgt.

Außerdem ist Gegenstand der Erfindung ein Verfahren zur Isolierung von Wicklungen durch Tränken der Wicklungen mit Tränkharzmassen und Härtung der Tränkharzmassen durch Erhitzen der getränkten Wicklungen auf Temperaturen von 100 bis 180°C, das dadurch gekennzeichnet ist, daß Tränkharzmassen gemäß der vorstehenden Definition eingesetzt werden.

Es ist also wesentlich, daß gemäß der Erfindung als Acrylate eingesetzt werden:

a) Hexandioldiacrylat (HDDA) und/oder
b) Butandioldiacrylat (BuDA).

Die Mengen der Acrylate werden entsprechend der Kenntnis des Fachmanns auf diesem Gebiet den Ungesättigtkeiten der ungesättigten Polyester angepaßt. Es kann ein erheblicher Unterschuß oder ein geringer Überschuß eingesetzt werden. Es ist aber nicht nötig, einen so großen Überschuß einzusetzen, wie dies bei Styrol in der Regel üblich ist, weil - wie oben dargelegt - beträchtliche Mengen Styrol bei der Aushärtung der getränkten Spulen abgedampft werden. Obwohl, wie dargelegt, ein Unterschuß eingesetzt werden kann, ist dies in der Regel nicht zweckmäßig, weil alle Ungesättigtkeiten der ungesättigten Polyester zweckmäßig mittels der Acrylate und Methacrylate vernetzt werden. Da der Abdampf-Verlust gemäß der Erfindung in der Regel nicht 5 Gew.-%, meist nicht 2 Gew.-% der genannten Acrylate beträgt, bezogen auf die für eine vollständige Vernetzung der Ungesättigtkeiten erforderlichen Menge, ist es bevorzugt, daß die Tränkharzmassen gemäß der Erfindung keinen größeren Überschuß als 5 Gew.-%, vorzugsweise 2 Gew.-%, wie vorstehend definiert, Acrylate und Methacrylate aufweisen. Wenn ein Unterschuß angewandt wird, sollte dieser aus den o.g. Gründen nicht unter 10 Gew.-%, vorzugsweise nicht unter 5 Gew.-%, entsprechend der obigen Definition, liegen.

Ein wesentliches weiteres Merkmal der Tränkharze gemäß der Erfindung liegt darin, daß deren Viskosität maximal 1500 mPa·s bei 25°C beträgt. Es handelt sich hierbei um Viskositäten, die beträchtlich über den Viskositäten der auf dem Markt befindlichen Tränkharzmassen auf Basis Styrol als Reaktivverdünner liegen. Diese haben in der Regel eine Viskosität im Bereich von etwa 100 bis 500 mPa·s. Es ist für den Fachmann außerordentlich überraschend, daß mit derartig hohen Viskositäten, wie sie die Tränkharzmassen gemäß der Erfindung haben können, eine einwandfreie Penetration der Wicklungen erzielt werden kann, wobei die mechanischen und elektrischen Eigenschaften im Isolations-System dem Stand der Technik entsprechen oder überlegen sind denjenigen, die mit den Styrol-haltigen Tränkharzmassen des Stands der Technik erzielt werden können.

Nach einer bevorzugten Ausführungsform der Erfindung enthalten die Tränkharzmassen zusätzlich

    c) Hydroxypropylmethacrylat (HPMA) und/oder
    d) Butandiolmonoacrylat (BDMA),

und zwar in Mengen von bis zu etwa 10 Gew.-%, bezogen auf die Gesamtmenge der Acrylate und Methacrylate. Durch den Zusatz dieser Mono(meth)acrylate wird die Viskosität erniedrigt, die sonstigen Eigenschaften der Isolierungen jedoch kaum verbessert. Die Menge dieser Mono(meth)acrylate sollte deshalb möglichst niedrig sein, zweckmäßig unter 5 Gew.-%. Mit einer Menge von mehr als 1 Gew.-% kann schon eine merkliche Verminderung der Viskosität erzielt werden.

Es ist aber überraschenderweise nicht möglich, Tränkharzmassen mit brauchbaren oder gegenüber dem Stand der Technik überlegenen Eigenschaften nur unter Verwendung der Acrylate c) und/oder d) zu erhalten.

Nach einer weiteren Ausführungsform gemäß der Erfindung enthalten die Tränkharzmassen zusätzlich Tri(meth)acrylate, zweckmäßig in den gleichen Mengen, wie sie oben für die Monoacrylate genannt wurden. Der Zusatz dieser Triacrylate hat die überraschende Wirkung, daß die mechanischen Eigenschaften, z. B. die Verbackungszahl nach DIN 46448 der ausgehärteten Tränkharze verbessert sind. Geeignete Tri(meth)acrylate sind Pentaerythrittriacrylat, Pentaerythrittrimethacrylat, Trimethylolpropantriacrylat, Trimethylolpropantrimethacrylat.

Die Tränkharzmassen gemäß der Erfindung können als ungesättigte Polyesterharze die bekannten für diesen Zweck eingesetzten Verbindungen enthalten, insbesondere die sogenannten Imid-haltigen ungesättigten Polyester, wie sie in den DE-A-1 570 273, 1 770 386 und 2 856 050 beschrieben sind. Es können aber auch sogenannte Imid-freie Polyester verwendet werden, wie sie seit Jahrzehnten bekannt sind. Diese ungesättigten Polyester sind Kondensationsprodukte aus mehrwertigen Carbonsäuren, mehrwertigen Alkoholen, und - wenn sie Imid-haltig sind - Aminogruppen enthaltenden Verbindungen, gegebenenfalls mit einem Anteil an monofunktionellen Verbindungen. Beispiele für mehrwertige Carbonsäuren sind Dicarbonsäuren, wie Malein- oder Fumarsäure, Citraconsäure, Itakonsäure, gegebenenfalls im Gemisch mit gesättigten oder aromatischen Carbonsäuren wie Bernstein- oder Adipinsäure, Phthalsäure, Isophthalsäure, Tere-phthalsäure und dergleichen, sowie Tetrahydrophthalsäure, Endomethylentetrahydrophthalsäure bzw. die entsprechenden teil- oder vollhalogenierten Verbindungen (mit flammhemmenden Eigenschaften). Beispiele für Verbindungen mit unterschiedlichen funktionellen Gruppen sind Zitronensäure, Monoethanolamin, Aminoethancarbonsäure sowie die entsprechenden 3 oder 4 $CH_2$-Gruppen enthaltenden Aminoalkohole oder Aminocarbonsäuren. Die Säuren können in Form von Estern, Halbestern oder Anhydrigen eingesetzt werden.

Als Hydroxylgruppen enthaltende Verbindungen können ebenfalls grundsätzlich die nach dem Stand der Technik zur Herstellung von Polyestern verwendeten Verbindungen eingesetzt werden. Geeignete Diole sind beispielsweise Glykol, Neopentylglykol, Propylenglykol. Polyole mit 3 oder 4 Hydroxylgruppen sind beispielsweise Glycerin, Trimethylolpropan, Trimethylolethan, Pentaerythrit, Dipentaerythrit, Trishydroxyethylisocyanurat. Die Imid-haltigen ungesättigten Polyester enthalten zweckmäßig einkondensiert Tetrahydrophthalsäure bzw. dessen Anhydrid, die mit Aminogruppen einen 5-gliedrigen Imid-ring bildet. Die Polyester können als Kettenabbrecher auch monofunktionelle Carbonsäuren, Alkohole und/oder Amine enthalten. Sie können auch gesättigte und ungesättigte Öle, z. B. hydroxyfunktionelle Öle, wie Ricinusöl oder carboxyfunktionelle Öle, wie Maleinatöle enthalten.

Die Tränkharzmassen gemäß der Erfindung können außerdem übliche Zusatzstoffe enthalten wie Pigmente, Streckmittel, plastifizierende Komponenten, Katalysatoren (z. B. Peroxide), Beschleuniger (z. B. Metallsalze), Stabilisatoren (z. B. Hydrochinon, Benzochinon), wie sie auch in den oben genannten Literaturstellen erwähnt sind.

Die Tränkharzmassen gemäß der Erfindung können zur Erzielung besonderer Effekte auch geringe Mengen Styrol oder Allyl-Verbindungen, wie Diallylphthalat enthalten, wobei deren Menge nicht über 10 Gew.-%, bezogen auf das Gewicht der in den Tränkharzmassen enthaltenen Acrylate liegen soll.

Die Verwendung der Tränkharzmassen zum Imprägnieren von elektrischen Wicklungen kann z. B. in folgender Weise erfolgen:

### Tauchimprägnierung

Bei diesem Verfahren wird das zu imprägnierende Gut unter Einhaltung - durch Vorversuche - ermittelter Taktzeiten in das Tränkharz eingetaucht oder im Durchlaufverfahren durch das Tränkharz gezogen. Anschließend erfolgt in einem Kammer- oder Durchlaufofen die Härtung des Tränkharzes während 1 bis 5 h bei 120 bis 170°C.

### Vakuum - Imprägnierung

Bei der Anwendung dieses Verfahrens wird zunächst das zu tränkende Gut in einem Vakuumbehälter eingebracht und sodann evakuiert.

Ist das gewünschte Vakuum erreicht, wird aus einem Vorratsbehälter das Tränkmittel dem Vakuumkessel zugeführt. Entscheidend für die Imprägnierqualität ist dabei nicht ein sehr langes Halten des Vakuums, sondern die Länge der Belüftungszeit, damit das Tränkmittel durch den beim Brechen des Vakuums entstehenden Druck in die verbliebenen Hohlräume hineingedrückt wird.

Um hier zu schnelleren Zeiten zu kommen, kann nach dem Vakuum auch Überdruck angewandt werden. Nur für ganz wenige, sehr schwierig zu imprägnierende Objekte ist das Vakuum-Druckverfahren unerläßlich.

Die Härtung erfolgt wie unter Tauchverfahren beschrieben.

### Träufelimprägnierung

Im Gegensatz zu den bisher beschriebenen Verfahren werden die Objekte beim Träufeln nicht in das Tränkmittel getaucht, sondern dieses wird mittels Düsen gezielt auf die rotierende Wicklung aufgebracht.

Um eine gutes Eindringen des Harzes in die Wicklungen zu gewährleisten, ist es erforderlich, die zu beträufelnden Objekte vorzuwärmen. Dies kann durch induktive Aufheizung oder durch Erwärmung in einem vorgeschalteten Ofen erfolgen. Da die hier zum Einsatz kommenden Harze sehr kurze Gelierzeiten (ca 5 bis 8 min bei 100°C, bei Tränkharzen mindestens 14 min bei 100°C) aufweisen, sollte die Temperatur beim Träufelvorgang 95°C nicht überschreiten, um ein vorzeitiges Gelieren des Harzes in der Nut zu verhindern. Anschließend werden die Objekte - weiter rotierend - auf ca. 130°C aufgeheizt und während 15 bis 30 min - je nach Einstellung des Harzes - ausgehärtet.

### Tauchimprägnierung mit anschließend rotierender Aushärtung

Dieses Verfahren wird hauptsächlich bei großen, hoch beanspruchten Rotoren und Statoren angewandt. Die Objekte werden wie üblich (eventuell mit Vakuum) in das Tränkmittel getaucht und anschließend auf Rotierstationen oder Rollen durch den Härtungsofen gezogen.

Die Härtung erfolgt während 2 bis 6 h bei 120 bis 170°C.

### Herstellungsbeispiele für ungesättigte Polyester (UP)

### Herstellungsbeispiel 1

In einem Reaktionsgefäß, das mit Thermometer, Rührer und Kondensator ausgestattet ist, werden 2 325 g Ricinusöl und 600 g Maleinsäureanhydrid unter Rühren und Überleiten von Inertgas auf 130°C erhitzt und anschließend 2 Stunden bei 130°C gehalten. Auf diese Weise wird ein Vorprodukt erhalten, das wie nachfolgend beschrieben verwendet wird.

In einen 2 l-Dreihalskolben, der mit Thermometer, Rührer, Auskreiser und Kondensator ausgerüstet ist, werden 150 g Monoethanolamin und 100 ml Xylol vorgelegt und portionsweise mit 372 g Tetrahydrophthalsäureanhydrid so versetzt, daß die exotherme Reaktion unter Kontrolle bleibt. Anschließend wird auf 165°C erhitzt und unter Xylol-Umlauf kondensiert bis zur Säurezahl < 3. Dann werden 73 g Maleinsäureanhydrid, 819 g Vorprodukt und 60 ml Xylol hinzugefügt und unter Rühren und Xylol-Umlauf auf 185 bis 190°C erhitzt. Bei Erreichen einer Säurezahl von etwa 15 wird die Polykondensation abgebrochen, das Schleppmittel (Xylol) im Vakuum abdestilliert.

**Herstellungsbeispiel 2**

| Bestandteile: | Menge (g): |
|---|---|
| Neopentylglykol | 426 |
| Propylenglykol | 90 |
| Isophthalsäure | 424 |
| Maleinsäureanhydrid | 248 |
| Xylol | 114 |
| Hydrochinon | 0.14 |

In einen 4 l-Dreihals-Schliffkolben, der mit einem Rührwerk, Thermometer, Wasserabscheider und Kondensator ausgerüstet ist, werden Neopentylglykol und Propylenglykol eingefüllt und unter Überleiten von Inertgas auf 100°C geheizt. Dann wird Isophthalsäure zugesetzt und unter Rühren auf 210°C geheizt. Das bei der Reaktion entstehende Wasser wird abdestilliert und im Abscheider gesammelt. Bei Erreichen einer Säurezahl von ca. 9 wird die Veresterungsreaktion abgebrochen, das Reaktionsprodukt auf 140°C abgekühlt, nacheinander Maleinsäureanhydrid und Xylol zugegeben und wieder auf 210°C geheizt. Das Reaktionsgemisch wird bei 210°C unter Xylol-Umlauf gehalten, bis eine Säurezahl von 16.5 erreicht ist. Dann wird unter Vakuum das Xylol abdestilliert, auf 160°C abgekühlt und Hydrochinon (Stabilisator) zugesetzt. Das Polyesterharz hat eine Säurezahl von 15.0 und eine Viskosität von 800 mPa·s, gemessen 60 %-ig in Cyclohexanon bei 25°C.

**Beispiel 1**

Zu dem gemäß Herstellungsbeispiel 1 erhaltenen Ansatz werden bei 150°C 2.30 g Toluhydrochinon und bei etwa 100°C 850 g einer Mischung von Hexandioldiacrylat mit Hydroxypropylmethacrylat im Verhältnis 95 : 5 zugesetzt. Die erhaltene acrylische Lösung hat bei einem Festkörper von 60 % eine Viskosität von 630 mPa·s bei 25°C und eine Säurezahl von 10. (Die so erhaltene Lösung ist Acryllösung A.)

Unabhängig hiervon werden zu dem gemäß Herstellungsbeispiel 2 gegebenen Ansatz 830 g einer Mischung von Hexandioldiacrylat mit Hydroxypropylmethacrylat im Verhältnis 95 : 5 zugesetzt. Die erhaltene acrylische Lösung hat bei einem Festkörper von 55 % eine Viskosität von 1550 mPa·s bei 25°C und eine Säurezahl von 15. (Die so erhaltene Lösung ist Acryllösung B).

In einem Mischgefäß, das mit einem Rührer ausgestattet ist, werden 660 g Acryllösung A vorgelegt. Anschließend werden unter Rühren 330 g Acryllösung B zugefügt. Es wird bis zur völligen Homogenität des Gemisches gerührt. Die so erhaltene Tränkharzmasse hat bei einem Festkörper von 58 % eine Viskosität von 800 mPa·s bei 25°C. Sie wird zum Imprägnieren von elektrischen Wickelgütern eingesetzt und ergibt nach dem Aushärten während 3 h bei 130°C Isolierüberzüge mit ausgezeichneten mechanischen und elektrischen Eigenschaften.

Prüfungen gemäß DIN 46448 und 53505:

| | | |
|---|---|---|
| Gelzeit mit 2 % t-Butylperbenzoat (50 %-ig) bei 100°C | | 10.0 min |
| Verbackungszahl bei 155°C: | | 3.5 |
| Viskosität bei 25°C: | | 800 mPa·s |
| Shore-D-Härte: | | 63 ± 2 |
| Härtung in dicker Schicht | Oberseite: | 111 |
| | Inneres: | 111 |

**Beispiel 2**

In einem Mischgefäß, das mit einem Rührer ausgestattet ist, werden 500 g Acryllösung A vorgelegt. Anschließend werden unter Rühren 500 g Acryllösung B zugefügt. Es wird bis zur völligen Homogenität des Gemisches gerührt. Die so erhaltene Tränkharzmasse hat bei einem Festkörper von 58 % eine Viskosität von 1100 mPa·s bei 25°C. Sie wird zum Imprägnieren von elektrischen Wickelgütern eingesetzt und ergibt nach dem Aushärten während 3 h bei 130°C Isolierüberzüge mit ausgezeichneten mechanischen und elektrischen Eigenschaften.

Prüfungen gemäß DIN 46448 und 53505:

| Gelzeit mit 2 % t-Butylperbenzoat (50 %-ig) bei 100°C: | | 9.0 min |
| Verbackungszahl bei 155°C: | | 3.7 |
| Viskosität bei 25°C: | | 1100 mPa·s |
| Shore-D-Härte: | | 65 ± 2 |
| Härtung in dicker Schicht | Oberseite: | 221 |
| | Inneres: | 121 |

## Patentansprüche

1. Tränkharzmassen bestehend aus ungesättigten Polyestern und Acryloyl- und/oder Methacryloylverbindungen als Reaktivverdünner sowie gegebenenfalls üblichen Zusatzstoffen, dadurch gekennzeichnet, daß sie als Reaktivverdünner

a) Hexandioldiacrylat und/oder

b) Butandioldiacrylat

enthalten, und daß die Viskosität der Tränkharzmassen maximal 1500 mPa·s beträgt.

2. Tränkharze nach Anspruch 1, dadurch gekennzeichnet, daß sie zusätzlich

c) Hydroxypropylmethacrylat und/oder

d) Butandiolmonoacrylat

in Mengen bis zu 10 Gew.-%, bezogen auf die Gesamtmenge der in den Tränkharzen enthaltenen Acrylate und Methacrylate enthalten.

3. Tränkharze nach Anspruch 1 oder 2, dadurch gekennzeichnet, daß sie zusätzlich Triacrylate und/oder Trimethacrylate in Mengen von bis zu 10 Gew.-%, bezogen auf die Gesamtmenge der in den Tränkharzen enthaltenen Acrylate und Methacrylate enthalten.

4. Verfahren zum Imprägnieren von elektrischen Wicklungen durch Tränken der Wicklungen mit Tränkharzmassen auf Basis von ungesättigten Polyestern und Acryloyl- und/oder Methacryloylverbindungen und Erhitzen der getränkten Wicklungen auf Temperaturen von 100 bis 180°C, dadurch gekennzeichnet, daß Tränkharzmassen nach einem oder mehreren der Ansprüche 1 bis 3 verwendet werden.

## Claims

1. Impregnation materials consisting of unsaturated polyesters and acryloyl and/or methacryloyl compounds as reactive diluents and optionally conventional additives, characterised in that they contain

a) hexanediol diacrylate and/or

b) butanediol diacrylate

as reactive diluents and in that the viscosity of the impregnation materials is at the most 1500 mPa·s.

2. Impregnation resins according to claim 1, characterised in that they contain, in addition,

c) hydroxypropylmethacrylate and/or

d) butanediol monoacrylate

in quantities of up to 10 % by weight, based on the total quantity of the acrylates and methacrylates contained in the impregnation resins.

3. Impregnation resins according to claim 1 or claim 2, characterised in that they contain, in addition, triacrylates and/or trimethacrylates in quantities of up to 10 % by weight, based on the total quantity of the acrylates and methacrylates contained in the impregnation resins.

4. Process for the impregnation of electrical windings by impregnation of the windings with impregnation materials based on unsaturated polyesters and acryloyl and/or methacryloyl compounds and heating of the impregnated windings to temperatures of from 100 to 180°C, characterised in that impregnation materials according to one or more of claims 1 to 3 are used.

## Revendications

1. Masses résineuses d'imprégnation consistant en polyesters insaturés et composés acryloyliques et/ou méthacryloyliques servant de diluants réactifs avec, le cas échéant, des additifs usuels, caractérisées en ce qu'elles contiennent en tant que diluants réactifs

a) du diacrylate de l'hexane-diol et/ou

b) du diacrylate du butane-diol,

et en ce que leur viscosité est au maximum de 1500 mPa·s.

2. Résines d'imprégnation selon la revendication 1, caractérisées en ce qu'elles contiennent en outre

c) du méthacrylate d'hydroxypropyle et/ou

d) du monoacrylate du butane-diol,

en quantités allant jusqu'à 10 % en poids par rapport à la quantité totale des acrylates et méthacrylates contenus dans les résines d'imprégnation.

3. Résines d'imprégnation selon la revendication 1 ou 2, caractérisées en ce qu'elles contiennent en outre des triacrylates et/ou triméthacrylates en quantités allant jusqu'à 10 % en poids par rapport à la quantité totale des acrylates et méthacrylates contenus dans les résines d'imprégnation.

4. Procédé pour imprégner des enroulements électriques dans lequel on imprègne les enroulements par des masses résineuses d'imprégnation à base de polyesters insaturés et de composés acryloyliques et/ou méthacryloyliques et on chauffe les enroulements imprégnés à des températures de 100 à 180°C, caractérisé en ce que l'on utilise des masses résineuses d'imprégnation selon une ou plusieurs des revendications 1 à 3.